# EUROPÄISCHE PATENTSCHRIFT

(11) **EP 4 151 347 B1**
(45) Veröffentlichungstag und Bekanntmachung des Hinweises auf die Patenterteilung: **13.08.2025**
(21) Anmeldenummer: 21197101.5
(22) Anmeldetag: 16.09.2021
(51) Int. Cl.: B23K 1/00, B23K 1/002

(54) **VERFAHREN ZUR AUSBILDUNG VON LÖTVERBINDUNGEN UND LÖTEINRICHTUNG**
METHOD OF FORMING SOLDER JOINTS AND SOLDERING APPARATUS
PROCÉDÉ DE FORMATION DE CONNEXIONS BRASÉES ET DISPOSITIF DE BRASAGE

(43) Veröffentlichungstag der Anmeldung: 22.03.2023
(73) Patentinhaber: SEMIKRON Elektronik GmbH & Co. KG, 90431 Nürnberg (DE)
(72) Erfinder: Marinozzi, Marco, 4011 Aprilia (IT)

(56) Entgegenhaltungen:
- EP-A1- 3 067 143
- WO-A1-2016/177825
- DE-U1- 202019 102 179
- US-A1- 2014 014 648

## Beschreibung

Die Erfindung betrifft ein Verfahren zur Ausbildung von Lötverbindungen und eine Löteinrichtung zur Durchführung des Verfahrens.

Auf dem technischen Gebiet der Leistungselektronik ist es allgemein bekannt Bauteile mit einem Substrat zu verlöten. Die Bauteile können z.B. in Form von Leistungshalbleiterbauelementen, Stiften und/oder Hülsen vorliegen. Dabei werden die Bauteile auf dem Substrat angeordnet, wobei jeweilig ein Lot zwischen den Bauteilen und dem Substrat angeordnet ist. Die gesamte Anordnung wird z.B. in einem Ofen oder mittels Induktion erhitzt, so dass die Lote schmelzen und nach deren Wiedererstarren sich die Lötverbindungen zwischen den Bauteilen und dem Substrat ausbilden. Nachteilig dabei ist, dass die Lötverbindungen, aufgrund von lokal uneinheitlicher Erwärmung und/oder Abkühlung des Lots auf dem Substrat, qualitativ unterschiedlich ausgebildet sein können. Insbesondere können ein Teil der Lötverbindungen qualitative Mängel
aufweisen.

Aus dem Stand der Technik (siehe das Dokument EP3067143) ist ein Verfahren zur Ausbildung von Lötverbindungen von zu verlötenden Bauteilen mit einem Substrat bekannt, wobei das Substrat eine elektrisch nicht leitende Isolationsschicht und eine auf der Isolationsschicht angeordnete zu Leiterbahnen strukturierte Metallschicht aufweist, wobei die Bauteile auf der Metallschicht angeordnet sind und zwischen den Bauteilen und der Metallschicht jeweilig ein Lot angeordnet ist, mit folgenden Verfahrensschritten:
a) Durchführung einer Relativbewegung des Substrats zu einer bestrombaren Windung derart, dass nach Durchführung der Relativbewegung ein Zentralbereich einer von der Windung umschlossenen Windungsfläche in Normalenrichtung (N) des Substrats fluchtend zu einem zu verlötenden ersten Bauteil angeordnet ist,
b) Erhitzten des zwischen dem ersten Bauteil und der Metallschicht angeordneten Lots durch Induktion von Wirbelströmen im Bereich des ersten Bauteils mittels eines von der Windung erzeugten Magnetfelds, wobei eine Durchführung einer Relativbewegung des Substrats zu der Windung derart erfolgt, dass nach Durchführung der Relativbewegung der Zentralbereich der Windungsfläche in Normalenrichtung des Substrats fluchtend zu einem zu verlöteten zweiten Bauteil angeordnet ist,
c) Erhitzten des zwischen dem zweiten Bauteil und der Metallschicht angeordneten Lots durch Induktion von Wirbelströmen im Bereich des zweiten Bauteils mittels eines von der Windung erzeugten Magnetfelds.

Es ist Aufgabe der Erfindung ein Verfahren zur Ausbildung von qualitativ hochwertigen Lötverbindungen von zu verlötenden Bauteilen mit einem Substrat und eine Löteinrichtung, die zur Durchführung des Verfahrens ausgebildet ist, zu schaffen.

Diese Aufgabe wird gelöst durch ein Verfahren nach Anspruch 1.

Weiterhin wir diese Aufgabe gelöst durch eine Löteinrichtung nach Anspruch 12, die zur Durchführung eines erfindungsgemäßen Verfahrens ausgebildet ist.

Vorteilhafte Ausbildungen der Löteinrichtung ergeben sich in analoger Weise zu vorteilhaften Ausbildungen des Verfahrens und umgekehrt.

Es erweist sich als vorteilhaft, wenn bei Verfahrensschritt c) das Erhitzten des Lots durch Induktion von Wirbelströmen im Bereich des zweiten Bauteils mittels eines von der Windung erzeugten Magnetfelds beendet wird,
indem eine Durchführung einer Relativbewegung des Substrats zu der Windung derart erfolgt, dass nach Durchführung der Relativbewegung der Zentralbereich der Windungsfläche in Normalenrichtung des Substrats fluchtend zu einem zu verlöteten weiteren Bauteil angeordnet ist, oder
indem ein durch die Windung fließender Strom abgeschaltet wird, wobei eine Durchführung einer Relativbewegung des Substrats zu der Windung derart erfolgt, dass nach Durchführung der Relativbewegung der Zentralbereich der Windungsfläche in Normalenrichtung des Substrats fluchtend zu einem zu verlöteten weiteren Bauteil angeordnet ist. Im ersten Fall kann das Verfahren besonders rationell durchgeführt werden. Im zweiten Fall kann das Verfahren mit einem besonders niedrigen Energieverbrauch durchgeführt werden.

Weiterhin erweist es sich als vorteilhaft, wenn Verfahrensschritt c) solange mit einem jeweilig weiteren zu verlötenden Bauteil wiederholt wird bis alle zu verlötenden Bauteile mit dem Substrat verlötet sind, wobei beim Verlöten des letzten zu verlötenden Bauteils, wenn die Temperatur im Bereich des letzten zu verlötenden Bauteils die Grenztemperatur überschreitet, unmittelbar oder nach einer vorgegebenen Wartezeit das Erhitzten des Lots durch Induktion von Wirbelströmen im Bereich des letzten zu verlötenden Bauteils beendet wird. Hierdurch werden mittels des erfindungsgemäßen Verfahrens alle zu verlötenden Bauteile mit dem Substrat verlötet.

Weiterhin erweist es sich als vorteilhaft, wenn bei den Verfahrensschritten a), b) und gegebenenfalls c) zumindest nach Durchführung der jeweiligen Relativbewegung das Substrat zwischen dem zu verlötenden jeweiligen Bauteil und der Windung angeordnet ist. Hierdurch kann die Relativbewegung des Substrats zu der Windung besonders einfach ausgebildet sein, da bei der Relativbewegung keines der zu verlötenden Bauteile mit der Windung zusammenstoßen kann. Die Relativbewegung kann somit besonders schnell durchgeführt werden.

Ein Vorteil der Erfindung besteht darin, dass die Messung der Temperatur im Bereich des jeweiligen Bauteils, durch Messung der Temperatur eines in Normalenrichtung des Substrats fluchtend zu dem Bereich des jeweiligen Bauteils, insbesondere fluchtend zu dem jeweiligen Bauteil, auf einer dem jeweiligen Bauteil abgewandten Seite des Substrats angeordneten Oberflächenbereichs des Substrats erfolgt. Hierdurch kann die Relativbewegung des Substrats zu der Windung besonders einfach ausgebildet sein, da bei der Relativbewegung keines der zu verlötenden Bauteile mit einer Messeinrichtung, die zur Messung einer jeweiligen Temperatur in einem jeweiligen Bereich eines mit dem Substrat zu verlötenden jeweiligen Bauteils ausgebildet ist, zusammenstoßen kann. Die Relativbewegung kann somit besonders schnell durchgeführt werden.

Ein weiterer Vorteil der Erfindung besteht darin, dass die Messung der Temperatur im Bereich des jeweiligen Bauteils berührungslos mittels eines Pyrometers erfolgt. Hierdurch kann eine besonders schnelle Messung der Temperatur im Bereich des jeweiligen Bauteils erfolgen. Die Messeinrichtung ist somit vorzugsweise als Pyrometer ausgebildet.

In diesem Zusammenhang erweist es sich als vorteilhaft, wenn die Messung der Temperatur im Bereich des jeweiligen Bauteils anhand einer durch den Zentralbereich der Windungsfläche hindurch verlaufenden vom Bereich des jeweiligen Bauteils abgestrahlten Wärmestrahlung erfolgt. Hierdurch kann die Temperatur im Bereich des jeweiligen Bauteils mit hoher Präzision ermittelt werden.

Weiterhin erweist es sich als vorteilhaft, wenn dass die Windung Bestandteil eines Windungselements ist, wobei das Windungselement ein erstes Windungsanschlusselement aufweist, das mit einem ersten Ende der Wicklung elektrisch leitend verbunden ist, und ein zweites Windungsanschlusselement aufweist, das mit einem zweiten Ende der Wicklung elektrisch leitend verbunden ist, wobei zumindest ein Abschnitt des ersten Windungsanschlusselements und ein Abschnitt des zweiten Windungsanschlusselements v-förmig voneinander weg verlaufen. Hierdurch kann die Wicklung besonders einfach an eine Windungsstromerzeugungseinrichtung bzw. an eine

Windungsstromerzeugungsanordnung, die zur Erzeugung eines durch die Windung fließenden Stroms ausgebildet ist, elektrisch angeschlossen werden.

In diesem Zusammenhang erweist es sich als vorteilhaft, wenn das erste und zweite Windungsanschlusselement mit der Windung einstückig ausgebildet sind. Hierdurch ist das Windungsanschlusselement besonders einfach ausgebildet.

Weiterhin erweist es sich als vorteilhaft, wenn die Windung einen Anfangsabschnitt, einen sich an den Anfangsabschnitt anschließenden im wesentlichen kreisbogenförmig ausgebildeten Mittenabschnitt und einen sich an den Mittenabschnitt anschließenden Endabschnitt aufweist, wobei der Anfangsabschnitt und der Endabschnitt v-förmig aufeinander zu verlaufen. Durch diese geometrische Form der Windung ist das von der Windung erzeugte Magnetfeld derart ausgebildet, dass eine besonders effiziente Induktion von Wirbelströmen im Bereich des jeweiligen zu verlötenden Bauteils erfolgt.

Ferner erweist es sich als vorteilhaft, wenn bei Verfahrensschritt b) während der Durchführung der Relativbewegung des Substrats zu der Windung, die Windung das Magnetfeld weiterhin erzeugt oder nicht mehr erzeugt. Wenn während der Durchführung der Relativbewegung des Substrats zu der Windung, die Windung das Magnetfeld weiterhin erzeugt, kann das Verfahren besonders rationell durchgeführt werden.

Weiterhin erweist es sich als vorteilhaft, wenn die zu verlötenden Bauteile als Stifte oder als Hülsen ausgebildet sind. Lötverbindungen von Stiften oder Hülsen mit einem Substrat werden häufig, z.B. durch mechanische Schwingungen, mechanisch stark belastet, so dass diese Lötverbindungen qualitativ hochwertig ausgebildet sein müssen.

Weiterhin erweist sich ein Verfahren zu gleichzeitigen Ausbildung einer bestimmten Anzahl von Lötverbindungen von zu verlötenden Bauteilen mit einem Substrat, wobei bei dem Verfahren einsprechend der bestimmten Anzahl von Lötverbindungen, welche gleichzeitig ausgebildet werden sollen, eine entsprechende Anzahl von erfindungsgemäßen Verfahren zeitlich parallel bei dem Substrat ausgeführt werden, wobei einsprechend der bestimmten Anzahl von Lötverbindungen, welche gleichzeitig ausgeführt werden sollen, mindestens eine entsprechende Anzahl von Windungen zur Erzeugung eines jeweiligen Magnetfelds vorhanden sind, die in senkrechter Richtung zur Normelenrichtung des Substrats voneinander beanstandet sind, wobei bei dem Verfahrensschritt b) und gegebenenfalls bei dem Verfahrensschritt c) die Durchführung einer Relativbewegung des Substrats zu den Windungen erfolgt, wenn die Temperaturen in den Bereichen der gleichzeitig zu verlötenden Bauteile jeweils eine jeweilige Grenztemperatur, die mindestens so hoch ist wie die Schmelztemperatur des jeweiligen Lots, überschreiten. Mittels dieses Verfahrens können mehrere Lötverbindungen von zu verlötenden Bauteilen mit dem Substrat gleichzeitig ausgebildet werden, so dass dieses Verfahren eine besonders rationelle Ausbildung der Lötverbindungen ermöglicht.

In diesem Zusammenhang ermöglicht die Erfindung eine Löteinrichtung nach Anspruch 13, die zur Durchführung eines Verfahren zur gleichzeitigen Ausbildung einer bestimmten Anzahl von Lötverbindungen von zu verlötenden Bauteilen mit einem Substrat ausgebildet ist.

In diesem Zusammenhang erweist es sich als vorteilhaft, wenn die Windungsstromerzeugungsanordnung eine der jeweiligen Windung zugeordnete Windungsstromerzeugungseinrichtung, die jeweilig zur Erzeugung eines durch die ihr zugeordnete Windung fließenden Stroms ausgebildet ist, aufweist.

Es sei angemerkt, dass im Sinne der Erfindung unter einer Relativbewegung eines Substrats zu einer bestrombaren Windung sowohl eine Bewegung des Substrats zu einer im Bezug zur Erdoberfläche ortsfesten Windung als auch eine Bewegung der Windung zu einem im Bezug zur Erdoberfläche ortsfesten Substrat als auch eine Bewegung bei der sich das Substrat und die Windung gegenüber der Erdoberfläche bewegen, verstanden wird. Die Relativbewegung des Substrats zu der bestrombaren Windung kann in einem kartesischen Koordinatensystem in allen drei Raumrichtungen erfolgen.

Es sei weiterhin angemerkt, dass das Erhitzten des zwischen dem jeweiligen Bauteil und der Metallschicht angeordneten Lots durch Induktion von Wirbelströmen im Bereich des jeweiligen Bauteils, mittels eines von der Windung erzeugten Magnetfelds im Sinne der Erfindung, sowohl durch indirektes Erhitzen des Lots, indem z.B. die Metallschicht und falls vorhanden die weitere Metallschicht des Substrats durch Induktion von Wirbelströmen in die Metallschicht und falls vorhanden in die weitere Metallschicht im Bereich des jeweiligen Bauteils direkt erhitzt werden und das jeweilige Lot von der Metallschicht erhitzt wird und/oder das jeweilige Bauteil durch Induktion von Wirbelströmen in das jeweilige Bauteil erhitzt wird und das jeweilige Lot von dem jeweiligen Bauteil erhitzt wird, als auch durch direktes Erhitzen des Lots, indem das jeweilige Lot durch Induktion von Wirbelströmen in das jeweilige Lot erhitzt wird, erfolgen kann.

Ausführungsbeispiele der Erfindung werden nachfolgend unter Bezugnahme auf die unten stehenden Figuren erläutert. Dabei zeigen:
- FIG 1: eine zu verlötende Lötanordnung nach Durchführung eines ersten Verfahrensschritts des erfindungsgemäßen Verfahrens und eine erfindungsgemäße Löteinrichtung,
- FIG 2: eine Draufsicht auf ein Windungselement mit einer Windung und mit einem ersten und einem zweiten Windungsanschlusselement und auf einen Bereich eines Substrats bzw. einer weiteren Metallisierung eines Substrats,
- FIG 3: eine zu verlötende Lötanordnung nach Durchführung eines weiteren Verfahrensschritts des erfindungsgemäßen Verfahrens, sowie eine Windung und eine Messeinrichtung der Löteinrichtung,
- FIG 4: eine zu verlötende Lötanordnung nach Durchführung eines weiteren Verfahrensschritts des erfindungsgemäßen Verfahrens, sowie eine Windung und eine Messeinrichtung der Löteinrichtung,
- FIG 5: die Lötanordnung nach Durchführung des erfindungsgemäßen Verfahrens, sowie eine Windung und eine Messeinrichtung der Löteinrichtung und
- FIG 6: eine zu verlötende Lötanordnung nach Durchführung eines ersten Verfahrensschritts eines weiteren Verfahrens und eine weitere Löteinrichtung.

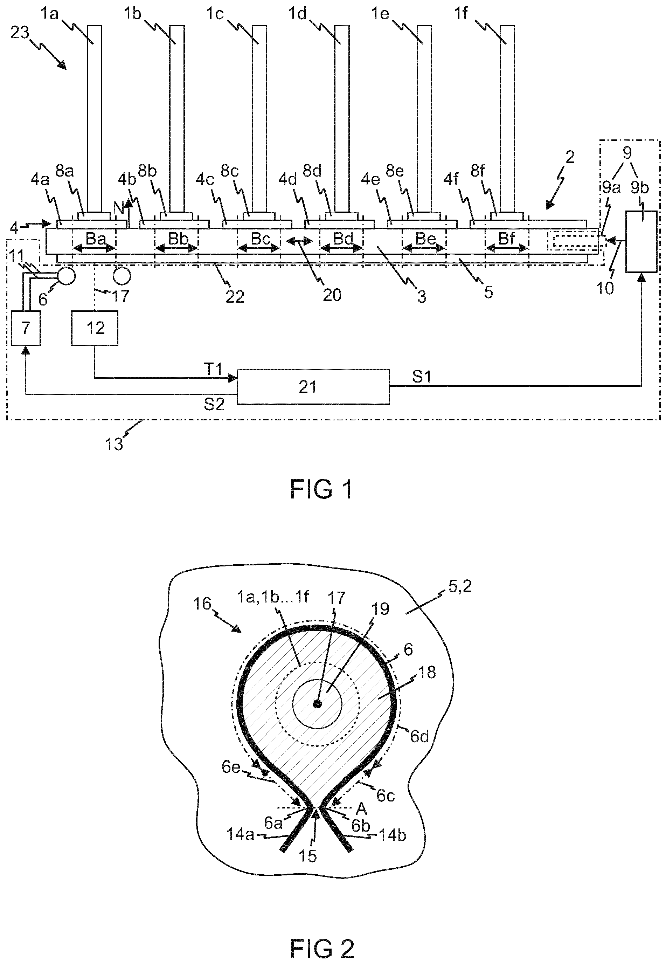

In FIG 1 ist eine zu verlötende Lötanordnung 23 nach Durchführung eines ersten Verfahrensschritts a) des erfindungsgemäßen Verfahrens und eine erfindungsgemäße Löteinrichtung 13 zur Durchführung des Verfahrens dargestellt. In FIG 2 ist ein Windungselement 16 mit einer Windung 6 und mit einem ersten und einem zweiten Windungsanschlusselement 14a und 14b dargestellt.

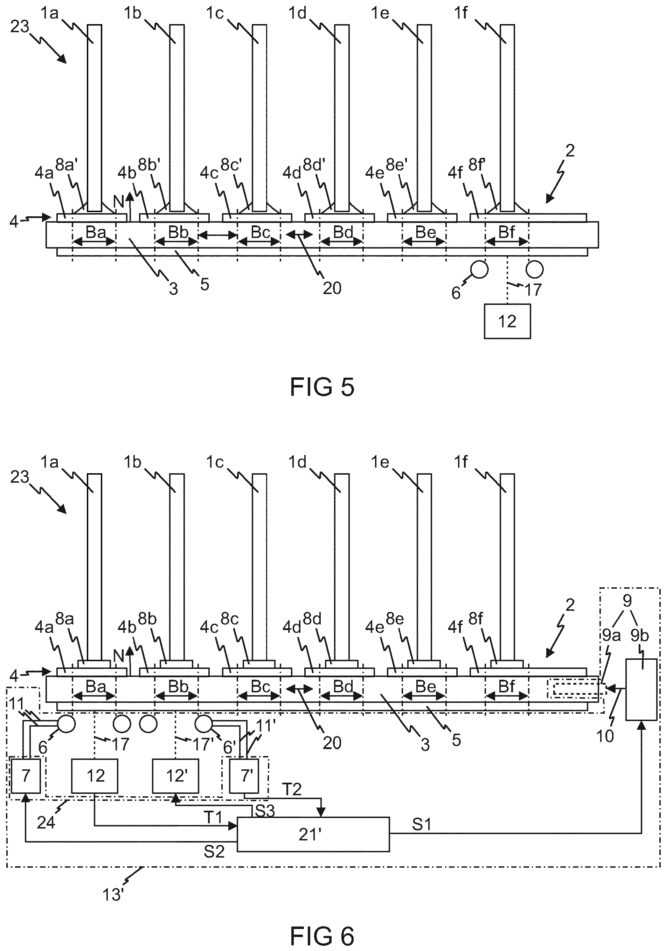

Das erfindungsgemäße Verfahren dient zur Ausbildung von Lötverbindungen 8a' bis 8f' (siehe FIG 5) von zu verlötenden Bauteilen 1a bis 1f mit einem Substrat 2, das eine elektrisch nicht leitende Isolationsschicht 3 und eine auf der Isolationsschicht 3 angeordnete zu Leiterbahnen 4a bis 4f strukturierte Metallschicht 4 aufweist, wobei die Bauteile 1a bis 1f auf der Metallschicht 4 angeordnet sind und zwischen den Bauteilen 1a bis 1f und der Metallschicht 4 jeweilig ein Lot 8a bis 8f angeordnet ist (siehe FIG 1).

Das Substrat 2 weist vorzugsweise eine elektrisch leitende, vorzugsweise unstrukturierte weitere Metallschicht 5 auf, wobei die Isolationsschicht 3 zwischen der Metallschicht 4 und der weiteren Metallschicht 5 angeordnet ist. Die Isolationsschicht 3 kann z.B. als Keramikplatte ausgebildet sein. Das jeweilige Substrat 2 kann z.B. als Direct Copper Bonded Substrat (DCB-Substrat), als Active Metal Brazing Substrat (AMB-Substrat) oder als Insulated Metal Substrat (IMS) ausgebildet sein.

Die zu verlötenden Bauteile 1a bis 1f können z.B. wie beim Ausführungsbeispiel als Stifte oder als Hülsen ausgebildet sind. Der jeweilige Stift kann einen an seinem dem Substrat 2 abgewandten Endbereich angeordneten Press-Fit-Abschnitt (in den Figuren nicht dargestellt) aufweisen. Der Press-Fit-Abschnitt dient vorzugsweise zur Ausbildung einer elektrisch leitenden Einpressverbindung mit einer Leiterplatte.

In einem ersten Verfahrensschritt a) erfolgt eine Durchführung einer Relativbewegung des Substrats 2 zu einer bestrombaren Windung 6 derart, dass nach Durchführung der Relativbewegung ein Zentralbereich 19 einer von der Windung 6 umschlossenen Windungsfläche 18 in Normalenrichtung N des Substrats 2 fluchtend zu einem zu verlötenden ersten Bauteil 1a angeordnet ist. Der Außenrand der Windungsfläche 18 umläuft den Zentralbereich 19, wobei der Zentralbereich 19 vom gesamten Außenrand der Windungsfläche 18 beabstandet angeordnet ist. Der Zentralbereich 19 ist vorzugsweise, wie in FIG 2 dargestellt, kreisflächenförmig ausgebildet.

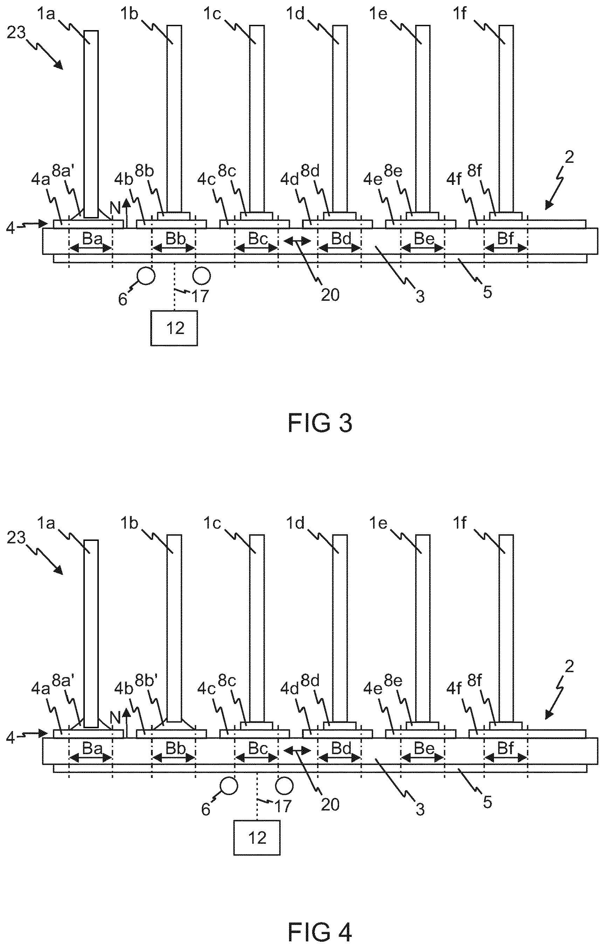

In einem nachfolgenden weiteren Verfahrensschritt b) erfolgt ein Erhitzten des zwischen dem ersten Bauteil 1a und der Metallschicht 4 angeordneten Lots 8a durch Induktion von Wirbelströmen im Bereich Ba des ersten Bauteils 1a mittels eines von der Windung 6 erzeugten Magnetfelds und Messen einer Temperatur im Bereich Ba des ersten Bauteils 1a, wobei, wenn die Temperatur im Bereich Ba des ersten Bauteils 1a eine Grenztemperatur, die mindestens so hoch ist wie die Liquidustemperatur des Lots 8a, überschreitet, unmittelbar oder nach einer vorgegebenen Wartezeit eine Durchführung einer Relativbewegung des Substrats 2 zu der Windung 6 derart erfolgt, dass nach Durchführung der Relativbewegung der Zentralbereich 19 der Windungsfläche 18 in Normalenrichtung N des Substrats 2 fluchtend zu einem zu verlöteten zweiten Bauteil 1b angeordnet ist. Die Grenztemperatur wird als Grenzwert vorgegeben. Während der Durchführung der Relativbewegung des Substrats 2 zu der Windung 6 kann die Windung 6 das Magnetfeld weiterhin erzeugen oder nicht mehr erzeugen, indem ein durch die Windung 6 fließender Strom abgeschaltet wird. In FIG 3 ist die zu verlötende Lötanordnung 23 nach Durchführung des weiteren Verfahrensschritts b), sowie die Windung 6 und eine Messeinrichtung 12 der Löteinrichtung 13, die zur Messung einer jeweiligen Temperatur in einem jeweiligen Bereich Ba bis Bf des mit dem Substrat 2 zu verlötenden jeweiligen Bauteils 1a bis 1f ausgebildet ist, dargestellt.

In einem nachfolgenden weiteren Verfahrensschritt c) erfolgt ein Erhitzten des zwischen dem zweiten Bauteil 1b und der Metallschicht 4 angeordneten Lots 8b durch Induktion von Wirbelströmen im Bereich Bb des zweiten Bauteils 1b mittels eines von der Windung 6 erzeugten Magnetfelds und Messen der Temperatur im Bereich des zweiten Bauteils 1b, wobei, wenn die Temperatur im Bereich des zweiten Bauteils Bb die Grenztemperatur überschreitet, unmittelbar oder nach einer vorgegebenen Wartezeit das Erhitzten des Lots 8b durch Induktion von Wirbelströmen im Bereich Bb des zweiten Bauteils 1b mittels eines von der Windung 6 erzeugten Magnetfelds beendet wird. Im Rahmen des Ausführungsbeispiels wird beim Verfahrensschritt c) das Erhitzten des Lots 8b durch Induktion von Wirbelströmen im Bereich Bb des zweiten Bauteils 1b mittels eines von der Windung 6 erzeugten Magnetfelds beendet, indem eine Durchführung einer Relativbewegung des Substrats 2 zu der Windung 6 derart erfolgt, dass nach Durchführung der Relativbewegung der Zentralbereich 19 der Windungsfläche 18 in Normalenrichtung N des Substrats 2 fluchtend zu einem zu verlöteten weiteren Bauteil 1c angeordnet ist. Beim Verfahrensschritt c) kann das Erhitzten des Lots 8b durch Induktion von Wirbelströmen im Bereich Bb des zweiten Bauteils 1b mittels eines von der Windung 6 erzeugten Magnetfelds auch beendet werden, indem ein durch die Windung fließender Strom abgeschaltet wird, wobei, vorzugsweise nach Abschalten des Stroms, eine Durchführung einer Relativbewegung des Substrats 2 zu der Windung 6 derart erfolgt, dass nach Durchführung der Relativbewegung der Zentralbereich 19 der Windungsfläche 18 in Normalenrichtung N des Substrats 2 fluchtend zu einem zu verlöteten weiteren Bauteil 1c angeordnet ist. In FIG 4 ist die zu verlötende Lötanordnung 23 nach Durchführung des Verfahrensschritts c), sowie die Windung 6 und die Messeinrichtung 12 dargestellt.

Das erfindungsgemäße Verfahren ermöglicht eine einheitliche auf die gewünschte Lötverbindung mit hoher Prozesswiederholgenauigkeit anpassbare lokale Erwärmung und Abkühlung des jeweiligen Lots auf dem Substrat, so dass qualitativ hochwertige Lötverbindungen mittels des erfindungsgemäßen Verfahrens erzielt werden.

Der Verfahrensschritt c) wird vorzugsweise solange mit einem jeweilig weiteren zu verlötenden Bauteil 1c, 1d, 1e bzw. 1f wiederholt wird bis alle zu verlötenden Bauteile 1a bis 1f mit dem Substrat 2 verlötet sind, wobei beim Verlöten des letzten zu verlötenden Bauteils 1f, wenn die Temperatur im Bereich Bf des letzten zu verlötenden Bauteils 1f die Grenztemperatur überschreitet, unmittelbar oder nach einer vorgegebenen Wartezeit das Erhitzten des Lots 8f durch Induktion von Wirbelströmen im Bereich Bf des letzten zu verlötenden Bauteils 1f beendet wird. Das Erhitzten des Lots 8f durch Induktion von Wirbelströmen im Bereich Bf des letzten zu verlötenden Bauteils 1f kann z.B. beendet werden, indem eine Durchführung einer Relativbewegung des Substrats 2 zu der Windung 6 derart erfolgt, dass nach Durchführung der Relativbewegung keine oder nur sehr geringe Wirbelströme im Bereich Bf des Bauteils 1f mittels des von der Windung 6 erzeugten Magnetfelds induziert werden oder indem ein durch die Windung 6 fließender Strom abgeschaltet wird. In FIG 5 ist die Lötanordnung 23 nach Durchführung des erfindungsgemäßen Verfahrens, sowie die Windung 6 und die Messeinrichtung 12 dargestellt.

Bei den Verfahrensschritten a), b) und c) ist vorzugsweise, wie bei dem Ausführungsbeispiel, zumindest nach Durchführung der jeweiligen Relativbewegung das Substrat 2 zwischen dem zu verlötenden jeweiligen Bauteil 1a bis 1f und der Windung 6 angeordnet. Alternativ kann, was in den Figuren nicht dargestellt ist, die Windung 6 zumindest nach Durchführung der jeweiligen Relativbewegung beabstandet vom Substrat 2 auch an der den Bauteilen 1a bis 1f zugewandten Seite des Substrats 2 angeordnet sein. Das jeweilige Bauteil 1a bis 1f kann in diesem Fall nach Durchführung der jeweiligen Relativbewegung durch die Windung 6 hindurchverlaufen.

Die Messung der Temperatur im Bereich Ba-Bf des jeweiligen Bauteils 1a bis 1f erfolgt, wie bei dem Ausführungsbeispiel, durch Messung der Temperatur eines in Normalenrichtung N des Substrats 2 fluchtend zu dem Bereich Ba-Bf des jeweiligen Bauteils 1a bis 1f, insbesondere fluchtend zu dem jeweiligen Bauteil 1a bis 1f, auf einer dem jeweiligen Bauteil 1a bis 1f abgewandten Seite 22 des Substrats 2 (siehe FIG 1) angeordneten Oberflächenbereichs des Substrats 2.

Die Messeinrichtung 12 ist als Pyrometer ausgebildet. Die Messung der Temperatur im Bereich Ba-Bf des jeweiligen Bauteils 1a bis 1f erfolgt berührungslos mittels eines Pyrometers 12. Die Messung der Temperatur im Bereich des jeweiligen Bauteils 1a bis 1f erfolgt in diesem Fall vorzugsweise anhand einer durch den Zentralbereich 19 der Windungsfläche 18 hindurch verlaufenden vom Bereich Ba-Bf des jeweiligen Bauteils 1a bis 1f abgestrahlten Wärmestrahlung 17, die vom Pyrometer 12 erfasst wird.

In FIG 2 ist eine Draufsicht auf ein Windungselement 16 mit der Windung 6 und mit einem ersten und einem zweiten Windungsanschlusselement 14a und 14b und auf einen Bereich des Substrats 2 bzw. der weiteren Metallisierung 5 eines Substrats 2 dargestellt. FIG 2 zeigt eine Draufsicht in FIG 1 von unten in Normalenrichtung N des Substrats 2 fluchtend zu dem zu verlötenden jeweiligen Bauteil 1a bis 1f, wobei das jeweilige Bauteil 1a bis 1f, da eigentlich in der Draufsicht gemäß FIG 2 nicht sichtbar, gestrichelt dargestellt ist.

Wie beispielhaft in FIG 2 dargestellt, ist die Windung 6 vorzugsweise Bestandteil eines Windungselements 16. Das Windungselement 16 weist ein erstes Windungsanschlusselement 14a auf, das mit einem ersten Ende 6a der Wicklung 6 elektrisch leitend verbunden ist. Das Windungselement 16 weist weiterhin ein zweites Windungsanschlusselement 14b auf, das mit einem zweiten Ende 6b der Wicklung 6 elektrisch leitend verbunden ist. Zumindest ein Abschnitt des ersten Windungsanschlusselements 14a und ein Abschnitt des zweiten Windungsanschlusselements 14b verlaufen v-förmig voneinander weg. Die Grenze A von der Windung 6 zu dem ersten und zweiten Windungsanschlusselements 14a und 14b ist in FIG 2 mittels einer punktierten Linie dargestellt. Die Grenze A verläuft vorzugsweise durch einen Einschnürungsbereich 15 der Windung 6 hindurch.

Die Windung 6 ist vorzugsweise aus einem Draht, insbesondere aus einem Kupferdraht, ausgebildet.

Das das erste und zweite Windungsanschlusselement 14a und 14b sind vorzugsweise mit der Windung 6 einstückig ausgebildet.

Die Windung 6 weist vorzugsweise einen Anfangsabschnitt 6c, einen sich an den Anfangsabschnitt 6c anschließenden im wesentlichen kreisbogenförmig, insbesondere kreisbogenförmig, ausgebildeten Mittenabschnitt 6d und einen sich an den Mittenabschnitt 6d anschließenden Endabschnitt 6e auf, wobei der Anfangsabschnitt 6c und der Endabschnitt 6e v-förmig aufeinander zu verlaufen. Der Anfangsabschnitt 6c und der Endabschnitt 6e laufen auf den Einschnürungsbereich 15 der Windung 6 zu. Das Zentrum des Zentralbereichs 19 der Windungsfläche 18 stimmt vorzugsweise mit dem Mittelpunkt von dem aus sich der Radius des Mittenabschnitts 6d erstreckt, überein.

In FIG 1 ist eine erfindungsgemäße Löteinrichtung 13, die zur Durchführung des oben beschriebenen erfindungsgemäßen Verfahrens ausgebildet ist, dargestellt. Die Löteinrichtung 13 weist die stromführbare Windung 6 und eine Windungsstromerzeugungseinrichtung 7, die zur Erzeugung eines durch die Windung 6 fließenden Stroms ausgebildet ist, auf. Die Windungsstromerzeugungseinrichtung 7 ist über elektrische Leitungen 11 mit der Windung 6 elektrisch leitend verbunden.

Die Löteinrichtung 13 weist weiterhin eine Relativbewegungseinrichtung 9, die zur Durchführung einer Relativbewegung des Substrats 2 zu der Windung 6 ausgebildet ist, auf. Die Relativbewegung des Substrats 2 zu der Windung 6 kann in einem kartesischen Koordinatensystem vorzugsweise in allen drei Raumrichtungen erfolgen. Im Rahmen des Ausführungsbeispiels weist die Relativbewegungseinrichtung 9 eine Substrathalteeinrichtung 9a auf, die dazu ausgebildet ist, das Substrat 2 zu halten und eine Antriebseinrichtung 9b auf, die dazu ausgebildet ist, die Substrathalteeinrichtung 9a und damit das Substrat 2 gegenüber der Windung 6 zu bewegen. Die Substrathalteeinrichtung 9a kann z.B. in Form von zwei Spannbacken vorliegen in die das Substrat 2 eingespannt ist.

Es sei angemerkt, dass die Relativbewegungseinrichtung 9 alternativ oder zusätzlich dazu ausgebildet sein kann, die Windung 6 gegenüber dem Substrat 2 zu bewegen, was in den FIG 1 und FIG 6 nicht dargestellt ist.

Die Löteinrichtung 13 weist weiterhin ein Pyrometer als Messeinrichtung 12, das zur Messung einer jeweiligen Temperatur in einem jeweiligen Bereich Ba-Bf eines mit dem Substrat 2 zu verlötenden jeweiligen Bauteils 1a bis 1f ausgebildet ist, auf.

Die Löteinrichtung 13 weist weiterhin eine Löteinrichtungssteuerung 21 auf, die zum Empfang der mittels der Messeinrichtung 12 gemessenen jeweiligen Temperatur und zur Steuerung der Windungsstromerzeugungseinrichtung 7 und der Relativbewegungseinrichtung 9, entsprechend der durchzuführenden Verfahrensschritte des Verfahrens, ausgebildet ist. Die von der Messeinrichtung 12 gemessene jeweilige Temperatur wird hierzu von der Messeinrichtung 12 in Form einer Temperaturgröße T1 an die Löteinrichtungssteuerung 21 übermittelt. Die Löteinrichtungssteuerung 21 übermittelt mindestens ein Steuersignal S1 zur Steuerung der Relativbewegungseinrichtung 9 an die Relativbewegungseinrichtung 9 und ein mindestens ein Steuersignal S2 zur Steuerung der Windungsstromerzeugungseinrichtung 7, z.B. zum Ein- und Ausschalten des durch die Windung 6 fließenden von der Windungsstromerzeugungseinrichtung 7 erzeugten Stroms. Die Windung 6 erzeugt, infolge des durch sie hindurchfließenden Stroms, ein Magnetfeld, mittels dessen Wirbelströme im Bereich des jeweiligen zu verlötenden Bauteils Ba bis Bf zu dem der Zentralbereich 19 der Windungsfläche 18 der Windung 6 in Normalenrichtung N des Substrats 2 fluchtend angeordnet ist, erzeugt werden. In FIG 6 ist eine zu verlötende Lötanordnung 23 nach Durchführung eines ersten Verfahrensschritts eines weiteren Verfahrens und eine weitere Löteinrichtung 13', die zur Durchführung des weiteren Verfahrens ausgebildet ist, dargestellt. Bei dem weiteren Verfahren handelt es sich um ein Verfahren zu gleichzeitigen Ausbildung einer bestimmten Anzahl von Lötverbindungen 8a'-8f' von zu verlötenden Bauteilen 1a bis 1f mit einem Substrat 2, wobei bei dem Verfahren einsprechend der bestimmten Anzahl von Lötverbindungen, hier zwei Lötverbindungen 8a' und 8b', welche gleichzeitig ausgeführt werden sollen, eine entsprechende Anzahl von oben beschriebenen erfindungsgemäßen Verfahren zeitlich parallel bei dem Substrat 2 ausgeführt werden. Das Verfahren zu gleichzeitigen Ausbildung einer bestimmten Anzahl von Lötverbindungen 8a' bis 8f' von zu verlötenden Bauteilen 1a bis 1f mit einem Substrat 2 beinhaltet somit alle Merkmale des erfindungsgemäßen Verfahrens.

Einsprechend der bestimmten Anzahl von Lötverbindungen, hier zwei Lötverbindungen 8a' und 8b', welche gleichzeitig ausgeführt werden sollen, ist mindestens eine entsprechende Anzahl von Windungen, hier zwei Windungen 6 und 6' zur Erzeugung eines jeweiligen Magnetfelds vorhanden, die in senkrechter Richtung zur Normelenrichtung N des Substrats 2 voneinander beanstandet sind.

Bei dem Verfahrensschritten b) und gegebenenfalls c) der erfindungsgemäßen Verfahren erfolgt die Durchführung einer Relativbewegung des Substrats 2 zu den Windungen, hier die Windungen 6 und 6', wenn die Temperaturen in den Bereichen, hier die beiden Bereiche Ba und Bb, der gleichzeitig zu verlötenden Bauteile, hier die beiden Bauteile 1a und 1b, jeweils eine jeweilige Grenztemperatur, die mindestens so hoch ist wie die Schmelztemperatur des jeweiligen Lots, hier des jeweiligen Lot 4a und 4b überschreiten.

Mittels des Verfahren zu gleichzeitigen Ausbildung einer bestimmten Anzahl von Lötverbindungen können somit mehrere Lötverbindungen, hier die beiden Lötverbindungen 8a' und 8b', von zu verlötenden Bauteilen 1a bis 1f mit dem Substrat 2 gleichzeitig ausgebildet werden, so dass dieses Verfahren eine besonders rationelle Ausbildung der Lötverbindungen ermöglicht.

Die Löteinrichtung 13' weist mehrere stromführbare Windungen, hier die beiden Windungen 6 und 6', die in senkrechter Richtung zur Normelenrichtung N des Substrats 2 voneinander beanstandet sind und eine Windungsstromerzeugungsanordnung 24, die zur Erzeugung von durch die Windungen 6 und 6' fließenden Strömen ausgebildet ist, auf. Die Windungsstromerzeugungsanordnung 24 weist vorzugsweise eine der jeweiligen Windung 6 bzw. 6 zugeordnete Windungsstromerzeugungseinrichtung 7 bzw. 7', die die jeweilig zur Erzeugung eines durch die ihr zugeordnete Windung 6 bzw. 6' fließenden Stroms ausgebildet ist. Die Windungsstromerzeugungseinrichtung 7 ist im Rahmen des Ausführungsbeispiels über elektrische Leitungen 11 mit der Windung 6 elektrisch leitend verbunden und die Windungsstromerzeugungseinrichtung 7' ist über elektrische Leitungen 11' mit der Windung 6' elektrisch leitend verbunden. Es sei angemerkt, dass die Windungsstromerzeugungsanordnung 24 auch nur eine Windungsstromerzeugungseinrichtung aufweisen kann, wobei in diesem Fall die Windungen 6 und 6' elektrisch in Reihe geschaltet sind und der durch die jeweilige Windung 6 bzw. 6' fließende jeweilige Strom physikalisch gesehen derselbe Strom ist.

Die Löteinrichtung 13' weist weiterhin eine Relativbewegungseinrichtung 9, die zur Durchführung einer Relativbewegung des Substrats 2 zu der Windung 6 ausgebildet ist, auf. Die Relativbewegungseinrichtung 9 der Löteinrichtung 13' ist identisch wie die Relativbewegungseinrichtung 9 der Löteinrichtung 13 ausgebildet, so dass um doppelte Beschreibungen zu vermeiden, bezüglich der Beschreibung der Relativbewegungseinrichtung 9 der Löteinrichtung 13' auf die Beschreibung der Relativbewegungseinrichtung 9 der Löteinrichtung 13 verweisen wird.

Die Löteinrichtung 13' weist weiterhin mehrere Messeinrichtungen 12 bzw. 12', die jeweilig zur Messung einer jeweiligen Temperatur in einem jeweiligen Bereich Ba-Bf eines mit dem Substrat 2 zu verlötenden jeweiligen Bauteils 1a bis 1f ausgebildet sind. Die Messeinrichtung 12' ist vorzugsweise einschließlich oben beschriebener vorteilhafter Ausbildungen der Messeinrichtung 12 identisch wie die Messeinrichtung 12 ausgebildet. Die Messeinrichtungen 12 und 12' sind als Pyrometer ausgebildet.

Die Löteinrichtung 13' weist weiterhin eine Löteinrichtungssteuerung 21'auf, die zum Empfang der mittels der Messeinrichtungen 12 und 12' gemessenen Temperaturen und zur Steuerung der Windungsstromerzeugungsanordnung 24 und der Relativbewegungseinrichtung 9, entsprechend der durchzuführenden Verfahrensschritte des Verfahrens, ausgebildet ist.

Die von der jeweiligen Messeinrichtung 12 bzw. 12' gemessene jeweilige Temperatur wird hierzu von der jeweiligen Messeinrichtung 12 bzw. 12 in Form einer jeweiligen Temperaturgröße T1 bzw. T2 an die Löteinrichtungssteuerung 21' übermittelt. Die Löteinrichtungssteuerung 21' übermittelt mindestens ein Steuersignal S1 zur Steuerung der Relativbewegungseinrichtung 9 an die Relativbewegungseinrichtung 9 und mindestens ein Steuersteuersignal, hier mindestens ein Steuersignal S1 und mindestens ein Steuersignal S3 an Windungsstromerzeugungsanordnung 24 zur Steuerung der Windungsstromerzeugungsanordnung 24, z.B. zum Ein- und Ausschalten der durch die Windungen 6 und 6' fließenden von der Windungsstromerzeugungsanordnung 24 erzeugten Ströme. Im Rahmen des Ausführungsbeispiels wird das Steuersignal S2 an die Windungsstromerzeugungseinrichtung 7 und das Steuersignal S3 an die Windungsstromerzeugungseinrichtung 7' übermittelt. Die jeweilige Windung 6 bzw. 6' erzeugt, infolge des durch sie hindurchfließenden jeweiligen Stroms, ein jeweiliges Magnetfeld, mittels dessen jeweilige Wirbelströme im Bereich des jeweiligen zu verlötenden Bauteils Ba bis Bf zu dem der jeweilige Zentralbereich 19 der jeweiligen Windungsfläche 18 der jeweiligen Windung 6 bzw. 6 in Normalenrichtung N des Substrats 2 fluchtend angeordnet ist, erzeugt werden.

## Patentansprüche

1. Verfahren zur Ausbildung von Lötverbindungen (8a'-8f') von zu verlötenden Bauteilen (1a-1f) mit einem Substrat (2), dass eine elektrisch nicht leitende Isolationsschicht (3) und eine auf der Isolationsschicht (3) angeordnete zu Leiterbahnen (4a-4f) strukturierte Metallschicht (4) aufweist, wobei die Bauteile (1a-1f) auf der Metallschicht (4) angeordnet sind und zwischen den Bauteilen (1a-1f) und der Metallschicht (4) jeweilig ein Lot (8a-8f) angeordnet ist mit folgenden Verfahrensschritten:
a) Durchführung einer Relativbewegung des Substrats (2) zu einer bestrombaren Windung (6) derart, dass nach Durchführung der Relativbewegung ein Zentralbereich (19) einer von der Windung (6) umschlossenen Windungsfläche (18) in Normalenrichtung (N) des Substrats (2) fluchtend zu einem zu verlötenden ersten Bauteil (1a) angeordnet ist,
b) Erhitzten des zwischen dem ersten Bauteil (1a) und der Metallschicht (4) angeordneten Lots (8a) durch Induktion von Wirbelströmen im Bereich (Ba) des ersten Bauteils (1a) mittels eines von der Windung (6) erzeugten Magnetfelds und berührungsloses Messen einer Temperatur im Bereich (Ba) des ersten Bauteils (1a) mittels eines Pyrometers, wobei das Messen in Normalenrichtung (N) des Substrats (2) fluchtend zu dem Bereich (Ba) des ersten Bauteils (1a), insbesondere fluchtend zu dem ersten Bauteil (1a), auf einer dem ersten Bauteil (1a) abgewandten Seite (22) des Substrats (2) angeordneten Oberflächenbereichs des Substrats (2) erfolgt, wobei, wenn die Temperatur im Bereich (Ba) des ersten Bauteils (1a) eine Grenztemperatur, die mindestens so hoch ist wie die Liquidustemperatur des Lots (8a), überschreitet, unmittelbar oder nach einer vorgegebenen Wartezeit eine Durchführung einer Relativbewegung des Substrats (2) zu der Windung (6) derart erfolgt, dass nach Durchführung der Relativbewegung der Zentralbereich (19) der Windungsfläche (18) in Normalenrichtung (N) des Substrats (2) fluchtend zu einem zu verlöteten zweiten Bauteil (1b) angeordnet ist,
c) Erhitzten des zwischen dem zweiten Bauteil (1b) und der Metallschicht (4) angeordneten Lots (8b) durch Induktion von Wirbelströmen im Bereich (Bb) des zweiten Bauteils (1b) mittels eines von der Windung (6) erzeugten Magnetfelds und berührungslos Messen der Temperatur mittels eines Pyrometers (12) im Bereich des zweiten Bauteils (1b), wobei das Messen in Normalenrichtung (N) des Substrats (2) fluchtend zu dem Bereich (Bb) des zweiten Bauteils (1b), insbesondere fluchtend zu dem zweiten Bauteil (1b), auf einer dem zweiten Bauteil (1b) abgewandten Seite (22) des Substrats (2) angeordneten Oberflächenbereichs des Substrats (2) erfolgt, wobei, wenn die Temperatur im Bereich des zweiten Bauteils (Bb) die Grenztemperatur überschreitet, unmittelbar oder nach einer vorgegebenen Wartezeit das Erhitzten des Lots (8b) durch Induktion von Wirbelströmen im Bereich (Bb) des zweiten Bauteils (1b) mittels eines von der Windung (6) erzeugten Magnetfelds beendet wird.

2. Verfahren nach Anspruch 1, **dadurch gekennzeichnet, dass** bei Verfahrensschritt c) das Erhitzten des Lots (8b) durch Induktion von Wirbelströmen im Bereich (Bb) des zweiten Bauteils (1b) mittels eines von der Windung (6) erzeugten Magnetfelds beendet wird,
indem eine Durchführung einer Relativbewegung des Substrats (2) zu der Windung (6) derart erfolgt, dass nach Durchführung der Relativbewegung der Zentralbereich (19) der Windungsfläche (18) in Normalenrichtung (N) des Substrats (2) fluchtend zu einem zu verlöteten weiteren Bauteil (1c) angeordnet ist, oder
indem ein durch die Windung fließender Strom abgeschaltet wird, wobei eine Durchführung einer Relativbewegung des Substrats (2) zu der Windung (6) derart erfolgt, dass nach Durchführung der Relativbewegung der Zentralbereich (19) der Windungsfläche (18) in Normalenrichtung (N) des Substrats (2) fluchtend zu einem zu verlöteten weiteren Bauteil (1c) angeordnet ist.

3. Verfahren nach Anspruch 2, **dadurch gekennzeichnet, dass** Verfahrensschritt c) solange mit einem jeweilig weiteren zu verlötenden Bauteil (1c, 1d, 1e, 1f) wiederholt wird bis alle zu verlötenden Bauteile (1a-1f) mit dem Substrat (2) verlötet sind, wobei beim Verlöten des letzten zu verlötenden Bauteils (1f), wenn die Temperatur im Bereich (Bf) des letzten zu verlötenden Bauteils (1f) die Grenztemperatur überschreitet, unmittelbar oder nach einer vorgegebenen Wartezeit das Erhitzten des Lots (8f) durch Induktion von Wirbelströmen im Bereich (Bf) des letzten zu verlötenden Bauteils (1f) beendet wird.

4. Verfahren nach einem der vorhergehenden Ansprüche, **dadurch gekennzeichnet, dass** bei den Verfahrensschritten a), b) und gegebenenfalls c) zumindest nach Durchführung der jeweiligen Relativbewegung das Substrat (2) zwischen dem zu verlötenden jeweiligen Bauteil (1a-1f) und der Windung (6) angeordnet ist.

5. Verfahren nach Anspruch 1, **dadurch gekennzeichnet, dass** die Messung der Temperatur im Bereich des jeweiligen Bauteils (1a-1f) anhand einer durch den Zentralbereich (19) der Windungsfläche (18) hindurch verlaufenden vom Bereich (Ba-Bf) des jeweiligen Bauteils (1a-1f) abgestrahlten Wärmestrahlung (17) erfolgt.

6. Verfahren nach einem der vorhergehenden Ansprüche, **dadurch gekennzeichnet, dass** die Windung (6) Bestandteil eines Windungselements (16) ist, wobei das Windungselement (16) ein erstes Windungsanschlusselement (14a) aufweist, das mit einem ersten Ende (6a) der Wicklung (6) elektrisch leitend verbunden ist, und ein zweites Windungsanschlusselement (14b) aufweist, das mit einem zweiten Ende (6b) der Wicklung (6) elektrisch leitend verbunden ist, wobei zumindest ein Abschnitt des ersten Windungsanschlusselements (14a) und ein Abschnitt des zweiten Windungsanschlusselements (14b) v-förmig voneinander weg verlaufen.

7. Verfahren nach Anspruch 6, **dadurch gekennzeichnet, dass** das erste und zweite Windungsanschlusselement (14a, 14b) mit der Windung (6) einstückig ausgebildet sind.

8. Verfahren nach einem der vorhergehenden Ansprüchen, **dadurch gekennzeichnet, dass** die Windung (6) einen Anfangsabschnitt (6c), einen sich an den Anfangsabschnitt (6c) anschließenden im wesentlichen kreisbogenförmig ausgebildeten Mittenabschnitt (6d) und einen sich an den Mittenabschnitt (6d) anschließenden Endabschnitt (6e) aufweist, wobei der Anfangsabschnitt (6c) und der Endabschnitt (6e) v-förmig aufeinander zu verlaufen.

9. Verfahren nach einem der vorhergehenden Ansprüche, **dadurch gekennzeichnet, dass** bei Verfahrensschritt b) während der Durchführung der Relativbewegung des Substrats (2) zu der Windung (6), die Windung (6) das Magnetfeld weiterhin erzeugt oder nicht mehr erzeugt.

10. Verfahren nach einem der vorhergehenden Ansprüche, **dadurch gekennzeichnet, dass** die zu verlötenden Bauteile als Stifte oder als Hülsen ausgebildet sind.

11. Verfahren zu gleichzeitigen Ausbildung einer bestimmten Anzahl von Lötverbindungen (8a'-8f') von zu verlötenden Bauteilen (1a-1f) mit einem Substrat (2), wobei bei dem Verfahren einsprechend der bestimmten Anzahl von Lötverbindungen (8a',8b'), welche gleichzeitig ausgebildet werden sollen, eine entsprechende Anzahl von Verfahren nach einem der Ansprüche 1 bis 10 zeitlich parallel bei dem Substrat (2) ausgeführt werden, wobei einsprechend der bestimmten Anzahl von Lötverbindungen (8a',8b'), welche gleichzeitig ausgeführt werden sollen, mindestens eine entsprechende Anzahl von Windungen (6,6') zur Erzeugung eines jeweiligen Magnetfelds vorhanden sind, die in senkrechter Richtung zur Normelenrichtung (N) des Substrats (2) voneinander beanstandet sind, wobei bei dem Verfahrensschritt b) und gegebenenfalls bei dem Verfahrensschritt c) die Durchführung einer Relativbewegung des Substrats (2) zu den Windungen (6,6') erfolgt, wenn die Temperaturen in den Bereichen (Ba,Bb) der gleichzeitig zu verlötenden Bauteile (1a, 1b) jeweils eine jeweilige Grenztemperatur, die mindestens so hoch ist wie die Schmelztemperatur des jeweiligen Lots (4a,4b), überschreiten.

12. Löteinrichtung, die zur Durchführung eines Verfahrens nach einem der Ansprüche 1 bis 10 ausgebildet ist, aufweisend,
eine stromführbare Windung (6),
eine Windungsstromerzeugungseinrichtung (7), die zur Erzeugung eines durch die Windung (6) fließenden Stroms ausgebildet ist,
eine Relativbewegungseinrichtung (9), die zur Durchführung einer Relativbewegung eines Substrats (2) zu der Windung (6) ausgebildet ist,
mit einem Pyrometer als Messeinrichtung (12), die zur berührungslosen Messung einer jeweiligen Temperatur in einem jeweiligen Bereich (Ba-Bf) eines mit dem Substrat (2) zu verlötenden jeweiligen Bauteils (1a-1f) derart ausgebildet ist, dass die Temperatur im Bereich (Ba-Bf) des jeweiligen Bauteils (1a-1f), durch Messung der Temperatur eines in Normalenrichtung (N) des Substrats (2) fluchtend zu dem Bereich (Ba-Bf) des jeweiligen Bauteils (1a-1f) erfolgt und
eine Löteinrichtungssteuerung (21), die zum Empfang der mittels der Messeinrichtung (12) gemessenen jeweiligen Temperatur und zur Steuerung der Windungsstromerzeugungseinrichtung (7) und der Relativbewegungseinrichtung (9), entsprechend der durchzuführenden Verfahrensschritte des Verfahrens, ausgebildet ist.

13. Löteinrichtung, die zur Durchführung eines Verfahrens nach Ansprüche 11 ausgebildet ist, aufweisend,
mehrere stromführbare Windungen (6,6'), die in senkrechter Richtung zur Normelenrichtung (N) des Substrats (2) voneinander beanstandet sind,
eine Windungsstromerzeugungsanordnung (24), die zur Erzeugung von durch die Windungen (6,6') fließenden Strömen ausgebildet ist,
eine Relativbewegungseinrichtung (9), die zur Durchführung einer Relativbewegung eines Substrats (2) zu den Windungen (6,6') ausgebildet ist, mehrere Pyrometer als Messeinrichtungen (12,12'), die jeweilig zur berührungslosen Messung einer jeweiligen Temperatur in einem jeweiligen Bereich (Ba-Bf) eines mit dem Substrat (2) zu verlötenden jeweiligen Bauteils (1a-1f) derart ausgebildet sind, dass die Temperatur im Bereich (Ba-Bf) des jeweiligen Bauteils (1a-1f), durch Messung der Temperatur eines in Normalenrichtung (N) des Substrats (2) fluchtend zu dem Bereich (Ba-Bf) des jeweiligen Bauteils (1a-1f) erfolgt und
eine Löteinrichtungssteuerung (21'), die zum Empfang der mittels der Messeinrichtungen (12,12') gemessenen Temperaturen und zur Steuerung der Windungsstromerzeugungsanordnung (24) und der Relativbewegungseinrichtung (9), entsprechend der durchzuführenden Verfahrensschritte des Verfahrens, ausgebildet ist.

## Claims

1. Method for forming solder joints (8a'-8f') between components (1a-1f) to be soldered and a substrate (2) that has an electrically non-conductive insulation layer (3) and a metal layer (4) arranged on the insulation layer (3) and structured to form conductor tracks (4a-4f), wherein the components (1a-1f) are arranged on the metal layer (4) and a solder (8a-8f) is arranged in each case between the components (1a-1f) and the metal layer (4), said method having the following method steps:
a) carrying out a relative movement of the substrate (2) with respect to an energizable winding (6) such that, after the relative movement has been carried out, a central region (19) of a winding surface (18) enclosed by the winding (6) is arranged in alignment in the normal direction (N) of the substrate (2) with a first component (1a) to be soldered,
b) heating the solder (8a) arranged between the first component (1a) and the metal layer (4) by induction of eddy currents in the region (Ba) of the first component (1a) by means of a magnetic field generated by the winding (6), and contactlessly measuring a temperature in the region (Ba) of the first component (1a) by means of a pyrometer,
wherein the measurement is effected in the normal direction (N) of the substrate (2) in alignment with the region (Ba) of the first component (1a), in particular in alignment with the first component (1a), on a surface region of the substrate (2) arranged on a side (22) of the substrate (2) that is remote from the first component (1a), wherein, if the temperature in the region (Ba) of the first component (1a) exceeds a limit temperature, which is at least as high as the liquidus temperature of the solder (8a), a relative movement of the substrate (2) with respect to the winding (6) is carried out, immediately or after a given waiting time, such that, after the relative movement has been carried out, the central region (19) of the winding surface (18) is arranged in alignment in the normal direction (N) of the substrate (2) with a second component (1b) to be soldered,
c) heating the solder (8b) arranged between the second component (1b) and the metal layer (4) by induction of eddy currents in the region (8b) of the second component (1b) by means of a magnetic field generated by the winding (6), and contactlessly measuring the temperature by means of a pyrometer (12) in the region of the second component (1b), wherein the measurement is effected in the normal direction (N) of the substrate (2) in alignment with the region (Bb) of the second component (1b), in particular in alignment with the second component (1b), on a surface region of the substrate (2) arranged on a side (22) of the substrate (2) that is remote from the second component (1b), wherein, if the temperature in the region of the second component (Bb) exceeds the limit temperature, heating of the solder (8b) by induction of eddy currents in the region (Bb) of the second component (1b) by means of a magnetic field generated by the winding is ended immediately or after a given waiting time.

2. Method according to Claim 1, **characterized in that**, in method step c), heating of the solder (8b) by induction of eddy currents in the region (Bb) of the second component (1b) by means of a magnetic field generated by the winding (6) is ended
by carrying out a relative movement of the substrate (2) with respect to the winding (6) such that, after the relative movement has been carried out, the central region (19) of the winding surface (18) is arranged in alignment in the normal direction (N) of the substrate (2) with a further component (1c) to be soldered, or
by switching off a current flowing through the winding, wherein a relative movement of the substrate (2) with respect to the winding (6) is carried out such that, after the relative movement has been carried out, the central region (19) of the winding surface (18) is arranged in alignment in the normal direction (N) of the substrate (2) with a further component (1c) to be soldered.

3. Method according to Claim 2, **characterized in that** method step c) is repeated with a respective further component (1c, 1d, 1e, 1f) to be soldered until all components (1a-1f) to be soldered have been soldered to the substrate (2), wherein, during soldering of the last component (1f) to be soldered, if the temperature in the region (Bf) of the last component (1f) to be soldered exceeds the limit temperature, heating of the solder (8f) by induction of eddy currents in the region (Bf) of the last component (1f) to be soldered is ended immediately or after a given waiting time.

4. Method according to one of the preceding claims, **characterized in that**, in method steps a), b) and optionally c), the substrate (2) is arranged between the respective component (1a-1f) to be soldered and the winding (6) at least after the respective relative movement has been carried out.

5. Method according to Claim 1, **characterized in that** the measurement of the temperature in the region of the respective component (1a-1f) is effected by means of thermal radiation (17) emitted from the region (Ba-Bf) of the respective component (1a-1f) and passing through the central region (19) of the winding surface (18).

6. Method according to one of the preceding claims, **characterized in that** the winding (6) is part of a winding element (16), wherein the winding element (16) has a first winding connection element (14a), which is electrically conductively connected to a first end (6a) of the coil (6), and a second winding connection element (14b), which is electrically conductively connected to a second end (6b) of the coil (6), wherein at least a portion of the first winding connection element (14a) and a portion of the second winding connection element (14b) extend away from one another in a v-shape.

7. Method according to Claim 6, **characterized in that** the first and second winding connection elements (14a, 14b) are formed integrally with the winding (6).

8. Method according to one of the preceding claims, **characterized in that** the winding (6) has a starting portion (6c), a substantially arcuate middle portion (6d) adjoining the starting portion (6c), and an end portion (6e) adjoining the middle portion (6d), wherein the starting portion (6c) and the end portion (6e) extend towards one another in a v-shape.

9. Method according to one of the preceding claims, **characterized in that**, in method step b), while the relative movement of the substrate (2) with respect to the winding (6) is being carried out, the winding (6) continues to generate the magnetic field or no longer generates the magnetic field.

10. Method according to one of the preceding claims, **characterized in that** the components to be soldered are in the form of pins or sleeves.

11. Method for simultaneously forming a specific number of solder joints (8a'-8f') between components (1a-1f) to be soldered and a substrate (2), wherein in the method, in accordance with the specific number of solder joints (8a', 8b') that are simultaneously to be formed, a corresponding number of methods according to one of Claims 1 to 10 are carried out on the substrate (2) temporally in parallel, wherein, in accordance with the specific number of solder joints (8a', 8b') that are simultaneously to be carried out, at least a corresponding number of windings (6, 6') for generating a respective magnetic field are present, said windings being spaced apart from one another in the perpendicular direction to the normal direction (N) of the substrate (2), wherein, in method step b) and optionally in method step c), a relative movement of the substrate (2) with respect to the windings (6, 6') is carried out if the temperatures in the regions (Ba, Bb) of the components (1a, 1b) that are simultaneously to be soldered in each case exceed a respective limit temperature, which is at least as high as the melting temperature of the respective solder (4a, 4b).

12. Soldering apparatus configured to carry out a method according to one of Claims 1 to 10, having
a winding (6) capable of carrying current,
a winding current generating device (7), which is configured to generate a current that flows through the winding (6),
a relative movement device (9), which is configured to carry out a relative movement of a substrate (2) with respect to the winding (6),
having a pyrometer as a measuring device (12), which is configured to contactlessly measure a respective temperature in a respective region (Ba-Bf) of a respective component (1a-1f) to be soldered to the substrate (2), such that the temperature in the region (Ba-Bf) of the respective component (1a-1f) is effected by measuring the temperature of a in alignment in the normal direction (N) of the substrate (2) with the region (Ba-Bf) of the respective component (1a-1f), and
a soldering apparatus controller (21), which is configured to receive the respective temperature measured by means of the measuring device (12) and to control the winding current generating device (7) and the relative movement device (9), in accordance with the method steps of the method that are to be carried out.

13. Soldering apparatus configured to carry out a method according to Claims 11, having
multiple windings (6, 6') capable of carrying current, which are spaced apart from one another in the perpendicular direction to the normal direction (N) of the substrate (2),
a winding current generating arrangement (24), which is configured to generate currents that flow through the windings (6, 6'),
a relative movement device (9), which is configured to carry out a relative movement of a substrate (2) with respect to the windings (6, 6'),
multiple pyrometers as measuring devices (12, 12'), which are each configured to contactlessly measure a respective temperature in a respective region (Ba-Bf) of a respective component (1a-1f) to be soldered to the substrate (2), such that the temperature in the region (Ba-Bf) of the respective component (1a-1f) is effected by measuring the temperature of a in alignment in the normal direction (N) of the substrate (2) with the region (Ba-Bf) of the respective component (1a-1f), and
a soldering apparatus controller (21'), which is configured to receive the temperatures measured by means of the measuring devices (12, 12') and to control the winding current generating arrangement (24) and the relative movement device (9), in accordance with the steps of the method that are to be carried out.

## Revendications

1. Procédé pour former des liaisons de brasage (8a'-8f') de composants à braser (1a-1f) avec un substrat (2) qui présente une couche isolante électriquement non conductrice (3) et une couche métallique (4) structurée en pistes conductrices (4a-4f) agencée sur la couche isolante (3), les composants (1a-1f) étant agencés sur la couche métallique (4) et une brasure (8a-8f) étant chaque fois aménagée entre les composants (1a-1f) et la couche métallique (4), le procédé comprenant les étapes suivantes :
a) réalisation d'un déplacement relatif du substrat (2) par rapport à un enroulement (6) apte à être parcouru par un courant, de telle sorte qu'après réalisation du déplacement relatif, une zone centrale (19) d'une surface (18) d'enroulement entourée par l'enroulement (6) soit agencée dans la direction normale (N) au substrat (2), en alignement avec un premier composant (1a) à braser,
b) chauffage de la brasure (8a) placée entre le premier composant (1a) et la couche métallique (4) par induction de courants de Foucault dans la zone (Ba) du premier composant (1a) au moyen d'un champ magnétique généré par l'enroulement (6) et mesure sans contact d'une température dans la zone (Ba) du premier composant (1a) au moyen d'un pyromètre, la mesure étant effectuée dans la direction normale (N) du substrat (2) en alignement avec la zone (Ba) du premier composant (1a), en particulier en alignement avec le premier composant (1a), sur une zone superficielle du substrat (2) agencée sur un côté (22) du substrat (2) opposé au premier composant (1a) ; lorsque la température dans la zone (Ba) du premier composant (1a) dépasse une température limite qui est au moins aussi élevée que la température de liquidus de la brasure (8a), immédiatement ou après un temps d'attente prédéfini, une exécution d'un déplacement relatif du substrat (2) par rapport à l'enroulement (6) étant effectué de telle sorte qu'après l'exécution du déplacement relatif, la zone centrale (19) de la surface d'enroulement (18) est agencée dans la direction normale (N) du substrat (2) en alignement avec un deuxième composant (1b) à braser,
c) chauffage de la brasure (8b) agencée entre le deuxième composant (1b) et la couche métallique (4) par induction de courants de Foucault dans la zone (Bb) du deuxième composant (1b) au moyen d'un champ magnétique généré par l'enroulement (6) et mesure sans contact de la température au moyen d'un pyromètre (12) dans la zone du deuxième composant (1b), la mesure étant effectuée dans la direction normale (N) du substrat (2) en alignement avec la zone (Bb) du deuxième composant (1b), en particulier en alignement avec le deuxième composant (1b), sur une zone de surface du substrat (2) située sur un côté (22) du substrat (2) opposé au deuxième composant (1b) ; lorsque la température dans la zone du deuxième composant (Bb) dépasse la température limite, le chauffage de la brasure (8b) par induction de courants de Foucault dans la zone (Bb) du deuxième composant (1b), au moyen d'un champ magnétique généré par l'enroulement (6), étant arrêté, immédiatement ou après un temps d'attente prédéfini.

2. Procédé selon la revendication 1, **caractérisé en ce que**, lors de l'étape c) du procédé, le chauffage de la brasure (8b) par induction de courants de Foucault dans la zone (Bb) du deuxième composant (1b) au moyen d'un champ magnétique généré par l'enroulement (6) est arrêté en effectuant un déplacement relatif du substrat (2) par rapport à l'enroulement (6) de telle sorte qu'après l'exécution du déplacement relatif, la zone centrale (19) de la surface (18) d'enroulement est alignée dans la direction normale (N) du substrat (2) par rapport à un autre composant (1c) à braser, ou
en coupant un courant circulant à travers l'enroulement, un déplacement relatif du substrat (2) par rapport à l'enroulement (6) étant effectué de telle sorte qu'après exécution du déplacement relatif, la zone centrale (19) de la surface (18) de l'enroulement dans la direction normale (N) du substrat (2) est agencée en alignement avec un autre composant (1c) à braser.

3. Procédé selon la revendication 2, **caractérisé en ce que** l'étape c) est répétée pour chaque autre composant à braser (1c, 1d, 1e, 1f) jusqu'à ce que tous les composants à braser (1a-1f) soient brasés avec le substrat (2), la brasure du dernier composant à braser (1f) étant arrêtée lorsque la température dans la zone (Bf) du dernier composant à braser (1f) dépasse la température limite, le chauffage de la brasure (8f) par induction de courants de Foucault dans la zone (Bf) du dernier composant à braser (1f) étant arrêté immédiatement ou après un temps d'attente prédéfini.

4. Procédé selon l'une des revendications précédentes, **caractérisé en ce que**, dans les étapes a), b) et, le cas échéant, c) du procédé, le substrat (2) est agencé entre le composant respectif (1a-1f) à braser et l'enroulement (6) au moins après l'exécution du déplacement relatif correspondant.

5. Procédé selon la revendication 1, **caractérisé en ce que** la mesure de la température dans la zone du composant respectif (1a-1f) s'effectue au moyen d'un rayonnement thermique (17) émis par la zone (Ba-Bf) du composant respectif (1a-1f), traversant la zone centrale (19) de la surface d'enroulement (18).

6. Procédé selon l'une des revendications précédentes, **caractérisé en ce que** l'enroulement (6) fait partie d'un élément d'enroulement (16), l'élément d'enroulement (16) comprenant un premier élément de raccordement d'enroulement (14a) qui est relié de manière électriquement conductrice à une première extrémité (6a) de l'enroulement (6), et un deuxième élément de raccordement d'enroulement (14b) qui est relié de manière électriquement conductrice à une deuxième extrémité (6b) de l'enroulement (6), au moins une partie du premier élément de raccordement d'enroulement (14a) et une partie du deuxième élément de raccordement d'enroulement (14b) s'écartant l'une de l'autre selon une forme de V.

7. Procédé selon la revendication 6, **caractérisé en ce que** les premier et deuxième éléments de raccordement d'enroulement (14a, 14b) sont formés d'une seule pièceavec l'enroulement (6).

8. Procédé selon l'une des revendications précédentes, **caractérisé en ce que** l'enroulement (6) comprend une partie initiale (6c), une partie centrale (6d) sensiblement en forme d'arc de cercle se raccordant à la partie initiale (6c) et une partie terminale (6e) se raccordant à la partie centrale (6d), la partie initiale (6c) et la partie terminale (6e) s'étendant l'une vers l'autre selon une forme en V.

9. Procédé selon l'une des revendications précédentes, **caractérisé en ce que**, lors de l'étape b) du procédé, pendant l'exécution du déplacement relatif du substrat (2) par rapport à l'enroulement (6), l'enroulement (6) continue à générer ou ne génère plus le champ magnétique.

10. Procédé selon l'une des revendications précédentes, **caractérisé en ce que** les composants à braser sont réalisés sous forme de broches ou de manchons.

11. Procédé pour réaliser simultanément un nombre déterminé de liaisons de brasage (8a'-8f') entre des composants à braser (1a-1f) et un substrat (2), dans lequel, en fonction du nombre déterminé de liaisons de brasage (8a', 8b') qui doivent être formées simultanément, un nombre correspondant de procédés selon l'une des revendications 1 à 10 sont mis en œuvre en parallèle dans le temps au niveau du substrat (2), en fonction du nombre déterminé de liaisons de brasage (8a', 8b') qui doivent être réalisés simultanément, au moins un nombre correspondant d'enroulements (6, 6') destinés à générer un champ magnétique respectif étant présents, qui sont espacés les uns des autres dans une direction perpendiculaire à la direction normale (N) du substrat (2) ; lors de l'étape b) du procédé et, le cas échéant, lors de l'étape c) du procédé, un déplacement relatif du substrat (2) par rapport aux enroulements (6, 6') étant effectué lorsque les températures dans les zones (Ba, Bb) des composants (1a, 1b) à braser simultanément dépassent chacune une température limite respective qui est au moins aussi élevée que la température de fusion de la brasure (4a, 4b) correspondante.

12. Dispositif de brasage conçu pour la mise en œuvre d'un procédé selon l'une des revendications 1 à 10, comprenant un enroulement (6) conducteur de courant,
un dispositif(7) de génération de courant de l'enroulement, qui est conçu pour générer un courant circulant à travers l'enroulement (6),
un dispositif (9) de déplacement relatif, qui est conçu pour effectuer un déplacement relatif d'un substrat (2) par rapport à l'enroulement (6), comprenant un pyromètre en tant que dispositif de mesure (12) qui est conçu pour mesurer sans contact une température respective dans une zone respective (Ba-Bf) d'un composant respectif (1a-1f) à braser avec le substrat (2) de telle sorte que la température dans la zone (Ba-Bf) du composant respectif (1a-1f) est mesurée par mesure de la température d'un composant aligné dans la direction normale (N) du substrat (2) par rapport à la zone (Ba-Bf) du composant respectif (1a-1f), et
une commande de dispositif de brasage (21), qui est conçue pour recevoir la température respective mesurée au moyen du dispositif de mesure (12) et pour commander le dispositif de génération de courant d'enroulement (7) et le dispositif de déplacement relatif (9) en fonction des étapes du procédé à mettre en œuvre.

13. Dispositif de brasage conçu pour la mise en œuvre d'un procédé selon la revendication 11, comprenant
une pluralité d'enroulements conducteurs de courant (6, 6'), qui sont espacés les uns des autres dans une direction perpendiculaire à la direction normale (N) du substrat (2),
un dispositif (24) de génération de courant d'enroulement, qui est conçu pour générer des courants circulant à travers les enroulements (6, 6'),
un dispositif de déplacement relatif (9), qui est conçu pour effectuer un déplacement relatif d'un substrat (2) par rapport aux enroulements (6, 6'),
plusieurs pyromètres en tant que dispositifs de mesure (12, 12'), qui sont conçus respectivement pour mesurer sans contact une température respective dans une zone respective (Ba-Bf) d'un composant respectif (1a-1f) à braser avec le substrat (2) de telle sorte que la température dans la zone (Ba-Bf) du composant respectif (1a-1f) est mesurée en mesurant la température d'un composant aligné dans la direction normale (N) du substrat (2) par rapport à la zone (Ba-Bf) du composant respectif (1a-1f) et
une commande de dispositif de brasage (21'), qui est conçue pour recevoir les températures mesurées au moyen des dispositifs de mesure (12, 12') et pour commander le dispositif (24) de génération de courant d'enroulement et le dispositif de déplacement relatif (9) en fonction des étapes du procédé à mettre en œuvre.
